# EUROPEAN PATENT SPECIFICATION

(11) **EP 4 202 627 B1**
(45) Date of publication and mention of the grant of the patent: **30.04.2025**
(21) Application number: 22210813.6
(22) Date of filing: 01.12.2022
(51) Int. Cl.: G06F 3/06

(54) **SMART DATA INGESTION**
INTELLIGENTE DATENAUFNAHME
INGESTION DE DONNÉES INTELLIGENTE

(30) Priority: 21.12.2021 US 202117557547
(43) Date of publication of application: 28.06.2023
(73) Proprietor: Elektrobit Automotive GmbH, 91058 Erlangen (DE)
(72) Inventor: Dahan, Jeremy, 60488 Frankfurt am Main (DE); Tiedemann, Simon, 60488 Frankfurt am Main (DE); Dawson, Dylan, 60488 Frankfurt am Main (DE)
(74) Representative: Continental Corporation

(56) References cited:
- US-A1- 2014 351 505
- US-A1- 2017 285 967
- US-A1- 2020 192 603
- US-B1- 10 671 309

## Description

### BACKGROUND

The present disclosure is generally related to a method, an apparatus, and a computer program for data ingestion.

Highly automated driving and autonomous driving are considered key components to get closer to the vision of zero fatalities in traffic. In order to make automated and autonomous vehicles safe and get them into series production, extensive simulation, testing, and validation is necessary. This is also crucial in order to raise acceptance by the end user.

Simulation, testing, and validation require the collection and processing of huge amounts of data by real-world vehicles. According to different studies within the industry, for validation, between several hundred million up to several billion test kilometers are needed. However, not only the overall amount of test kilometers is important, but also the content. All situations the vehicle could encounter need to be covered, from highly complex traffic situations to poor weather conditions in different regions, and all sorts of even more difficult and extreme scenarios.

For collecting data, fleets of test vehicles are required. Each test vehicle will produce between 10 and 100 terabyte of data per day with all the sensors and systems that have to be monitored. Assuming a test fleet of 100 vehicles, this sums up to 1 to 10 petabyte per day. Therefore, an infrastructure needs to be provided that is able to handle large sums of data day by day. Currently, this issue is addressed by providing more storage servers and processing units.

This, however, is a rather expensive approach. An improved solution is based on the distinction between so-called cold data and hot data. Data is normally defined as cold if it is not accessed or used for a specific amount of time. Data is defined as hot if it is accessed regularly. Cold data will be moved to a cheaper storage system, e.g. an archive, whereas hot data stays on a faster storage solutions.

The documents US 10 671 309 B1, US 2017/285967 A1 and US 2014/351505 A1 relate to exemplary concepts of data management.

In details, US 10 671 309 B1 relates to predicting usage for automated storage tiering in a system with different physical storage by evaluating characteristics of data.

US 2017/285967 A1 relates to storing data in an SSD according to the data characteristics and the storage tiers.

US 2014/351505 A1 relates to providing data attributes to a storage manager to use to select a storage tier to use for a data set management operation.

However, placing data on inefficient storage tiers can lead to a slow access, e.g., if hot data is stored on a slow storage solution, especially if archived data does have to be restored first, or to unnecessary high costs, e.g., if cold data is stored on a fast storage solution. In addition, moving data to a cheaper storage solution based only on historical usage is very imprecise. Furthermore, the categorizations can only be done for data that is already in the system for a minimum amount of time. Therefore, new data has to be initially stored on a default storage tier. Additionally, moving the data is both costly and takes a lot of time, this is true for new data as well as for existing data.

The concept of hot and cold data is likewise useful for distinguishing between data that needs to be brought to a data management system as fast as possible, and data that need not be available as fast. For example, hot data may be captured, stored on a hard disk within the vehicle, and then uploaded to a data facility using a fast internet connection. Of course, in such case the available bandwidth is limited. Captured cold data may first be stored on an array of hard disks, which are then shipped to an upload facility by courier. This allows for high throughput, as it is possible to have many different hard disks filled and brought to the upload facility in parallel. Of course, the data will not be available as fast.

### BRIEF SUMMARY

According to an aspect of the present disclosure, a method for ingesting data records comprises:
retrieving content-related descriptors, each descriptor being associated with a value classification;
retrieving a data record to be ingested;
assigning a value classification to the data record based on the descriptors; and
ingesting the data record in accordance with the assigned value classification. Ingesting the data record comprises selecting one of a plurality of transmission channels for the data record based on the value classification [see, e.g., description, par. 57], wherein the transmission channels differ in bandwidth and transportation time

According to another aspect of the present disclosure, a non-transitory computer readable storage medium has stored instructions for ingesting data records, which, when executed by a processor of the computer, cause the computer to:
retrieve content-related descriptors, each descriptor being associated with a value classification;
retrieve a data record to be ingested;
assign a value classification to the data record based on the descriptors; and
ingest the data record in accordance with the assigned value classification. Ingesting the data record comprises selecting one of a plurality of transmission channels for the data record based on the value classification [see, e.g., description, par. 57], wherein the transmission channels differ in bandwidth and transportation time

According to another aspect of the present disclosure, an apparatus for ingesting data records comprises:
a descriptor retrieving unit configured to retrieve content-related descriptors, each descriptor being associated with a value classification;
a data retrieving unit configured to retrieve a data record to be ingested;
a data classification unit configured to assign a value classification to the data record based on the descriptors; and
a data ingesting unit configured to ingest the data record in accordance with the assigned value classification. Ingesting the data record comprises selecting one of a plurality of transmission channels for the data record based on the value classification [see, e.g., description, par. 57], wherein the transmission channels differ in bandwidth and transportation time

Various objects, features, aspects, and advantages of the present principles will become apparent from the following detailed description and the appended claims in conjunction with the figures.

### BRIEF DESCRIPTION OF THE DRAWINGS

Fig. 1 schematically illustrates an exemplary block diagram of the electronic system of a motor vehicle;
Fig. 2 schematically illustrates a method for data ingestion;
Fig. 3 schematically illustrates a first embodiment of an apparatus for data ingestion;
Fig. 4 schematically illustrates a second embodiment of an apparatus for data ingestion;
Fig. 5 schematically illustrates a workflow based on value of data;
Fig. 6 schematically illustrates a first solution for data valuation;
Fig. 7 schematically illustrates a second solution for data valuation;
Fig. 8 schematically illustrates a third solution for data valuation;
Fig. 9 schematically illustrates a solution for data transportation; and
Fig. 10 depicts an exemplary use case for a solution according to the present principles.

### DETAILED DESCRIPTION

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the present disclosure, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

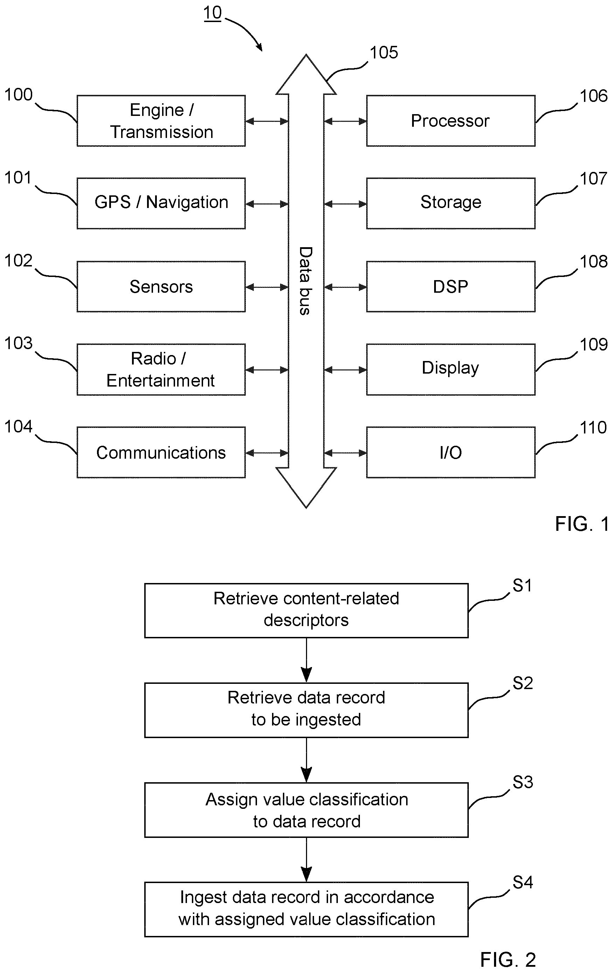

Fig. 1 schematically illustrates an exemplary block diagram of the electronic system of a motor vehicle 10. The system comprises various vehicle electronics modules, subsystems or components. An engine/transmission module 100 is configured to process and provide vehicle engine and transmission characteristic or parameter data, and may comprise an engine control unit and a transmission control unit. The engine control unit and the transmission control unit may exchange messages, sensor signals and control signals.

A global positioning system (GPS) and navigation module 101 provides navigation processing and location data for the motor vehicle 10. Sensors 102 provide sensor data, which may comprise data relating to vehicle characteristic or parameter data, and may also provide environmental data pertaining to the motor vehicle 10, its interior or surroundings, such as temperature, humidity and the like. Other sensors may include proximity sensors or cameras for sensing objects or traffic proximate to the motor vehicle 10. A radio/entertainment module 103 may provide data relating to audio/video media being played in the motor vehicle 10. The radio/entertainment module 103 may be integrated into or communicatively coupled to an entertainment unit configured to play AM/FM radio, satellite radio, compact disks, DVDs, digital media, streaming media and the like. A communications module 104 allows any of the modules to communicate with each other or with external devices via a wired connection or wireless protocol, such as LTE, 3G, Wi-Fi, Bluetooth, NFC, etc. The various modules 100-104 may be communicatively coupled to a data bus 105 for certain communication and data exchange purposes.

The motor vehicle 10 may further comprise a main processor 106 that centrally processes and controls data communication throughout the system of Fig. 1. A storage 107 may be configured to store data, software, media, files and the like. A digital signal processor 108 may comprise a processor separate from the main processor 106, or may be integrated within the main processor 106. Generally speaking, the digital signal processor 108 may be configured to take signals, such as voice, audio, video, temperature, pressure, position, etc. that have been digitized and then process them as needed. A display 109 may be configured to provide visual (as well as audio) indicia from any module in Fig. 1, and may be configured as one or more of LCD, LED, OLED, or any other suitable display. The display 109 may also be configured with audio speakers for providing audio output. An input/output module 110 is configured to provide data input and outputs to/from other peripheral devices, such as key fobs, device controllers, and the like. As discussed above, the modules 106-110 may be communicatively coupled to the data bus 105 for transmitting/receiving data and information from other modules.

Fig. 2 schematically illustrates a method according to the present principles for data ingestion. The method includes retrieving S1 content-related descriptors, each descriptor being associated with a value classification. The method further includes retrieving S2 a data record to be ingested. For example, the data record may originate from a motor vehicle that is travelling along a roadway such that the data record includes data that represents one or more states of the motor vehicle, one or more subsystems of the vehicle, and/or the motor vehicle's environmental surroundings. Based on the descriptors, a value classification is assigned S3 to the data record. The descriptors and the associated value classifications are obtained by analyzing usage of previously ingested data records or are specified by a user of the data records. For example, the value classifications may include two or more of hot, cold, and archive. The data record is then ingested S4 in accordance with the assigned value classification. In an embodiment, ingesting S4 the data record in accordance with the assigned value classification includes selecting one of a plurality of transmission channels for the data record based on the value classification, wherein the transmission channels differ in bandwidth and transportation time. In another embodiment, ingesting S4 the data record in accordance with the assigned value classification includes selecting one of a plurality of storage solutions for the data record based on the value classification. For example, the storage solutions may differ in availability and cost.

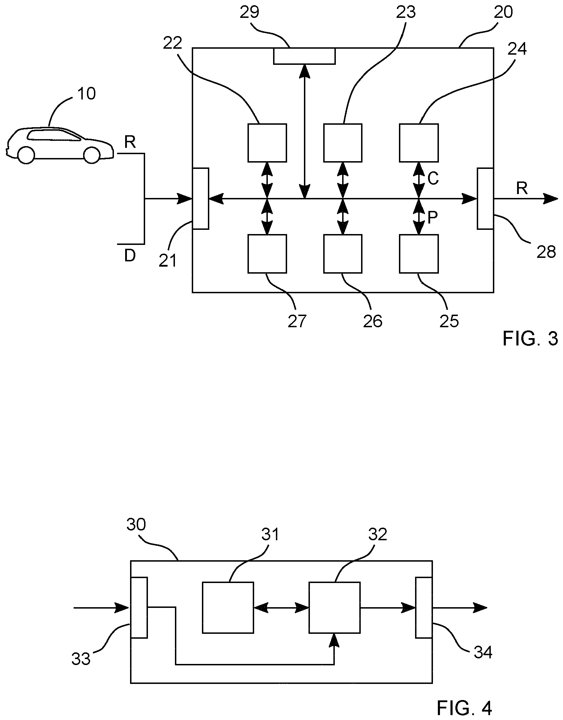

Fig. 3 schematically illustrates a block diagram of a first embodiment of an apparatus 20 according to the present principles for data ingestion. The apparatus 20 has an input 21, via which a descriptor retrieving unit 22 retrieves content-related descriptors D, each descriptor D being associated with a value classification. Furthermore, a data retrieving unit 23 retrieves, via the input 21, a data record R to be ingested. For example, the data record R may originate from a motor vehicle 10. A data classification unit 24 is configured to assign a value classification C to the data record R based on the descriptors D. The descriptors D and the associated value classifications C are obtained by analyzing usage of previously ingested data records R or are specified by a user of the data records R. For example, the value classifications C may include two or more of hot, cold, and archive. A data ingesting unit 25 is configured to ingest the data record R in accordance with the assigned value classification C. For this purpose, the data ingesting unit 25 makes the data record R available for further handling via an output 28. In an embodiment, ingesting the data record R in accordance with the assigned value classification C includes selecting one of a plurality of transmission channels for the data record R based on the value classification C. For example, the transmission channels may differ in bandwidth and transportation time. In another embodiment, ingesting the data record R in accordance with the assigned value classification C includes selecting one of a plurality of storage solutions for the data record R based on the value classification C. For example, the storage solutions may differ in availability and cost.

The descriptor retrieving unit 22, the data retrieving unit 23, the data classification unit 24, and the data ingesting unit 25 may be controlled by a control unit 26. A local storage unit 27 is provided for storing data during processing. A user interface 29 may be provided for enabling a user to modify settings of the descriptor retrieving unit 22, the data retrieving unit 23, the data classification unit 24, the data ingesting unit 25, and the control unit 26. The descriptor retrieving unit 22, the data retrieving unit 23, the data classification unit 24, the data ingesting unit 25, and the control unit 26 can be embodied as dedicated hardware units. Of course, they may likewise be fully or partially combined into a single unit or implemented as software running on a processor, e.g. a CPU or a GPU.

A block diagram of a second embodiment of an apparatus 30 according to the present principles for data ingestion is illustrated in Fig. 4. The apparatus 30 comprises a processing device 32 and a memory device 31. For example, the apparatus 30 may be a computer, a workstation or a distributed system. The memory device 31 has stored instructions that, when executed by the processing device 32, cause the apparatus 30 to perform steps according to one of the described methods. The instructions stored in the memory device 31 thus tangibly embody a program of instructions executable by the processing device 32 to perform program steps as described herein according to the present principles. The apparatus 30 has an input 33 for receiving data. Data generated by the processing device 32 are made available via an output 34. In addition, such data may be stored in the memory device 31. The input 33 and the output 34 may be combined into a single bidirectional interface.

The processing device 32 as used herein may include one or more processing units, such as microprocessors, digital signal processors, or a combination thereof.

The local storage unit 27 and the memory device 31 may include volatile and/or non-volatile memory regions and storage devices such as hard disk drives, optical drives, and/or solid-state memories.

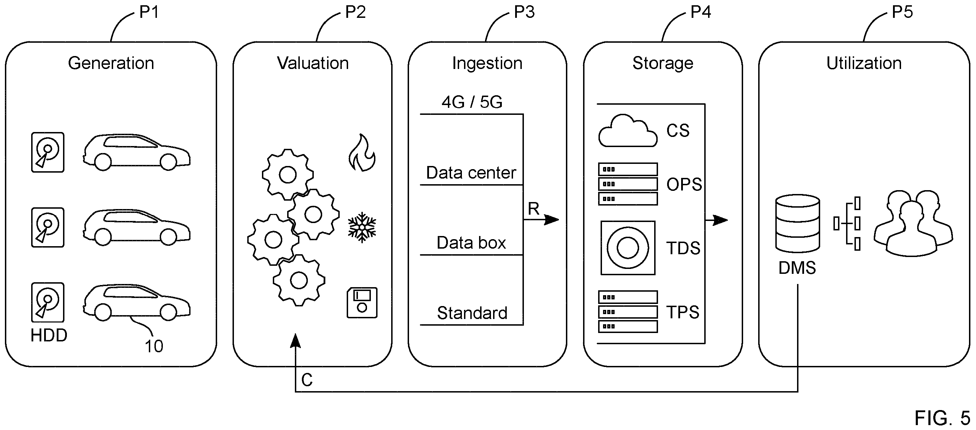

Fig. 5 schematically illustrates a workflow based on value of data. In this example, the data records to be ingested originate from a test fleet of motor vehicles 10. The workflow includes several distinct phases. In a data generation phase P1, test drive data are created by the motor vehicles 10 of the test fleet. In this phase, each motor vehicle 10 may have any kind of data records stored in an on-board storage unit, such as a hard disk drive HDD. In a data valuation phase P2, the data records R are analyzed and valuated. A value classification C is assigned to each data record R gets, e.g. hot, cold, or archive. In an ingestion phase P3, an optimal channel for transmission of a data record R can be selected based on the value classification C of the data record R. The choice of the channel is mainly based on a consideration of bandwidth versus transportation time. For example, hot data do often include a rather small amount of data but need to be delivered as soon as possible. Therefore, hot data records R may be transmitted using a 4G or 5G data connection or an upload to a data center. Cold data records R may, for example, be transmitted using an upload to a data center or by storing them on a data box for a later upload. A standard upload may be used for archive data records R. In a storage phase P4, an optimal storage solution can be selected for a data record R based on the value classification C of the data record R. The choice of the storage solution is mainly based on a consideration of cost versus availability, i.e. access time etc. For example, hot data records R shall be stored on storage solutions with high availability, such as cloud storage CS or on-premises-storage OPS, whereas cold data records R are stored on low-cost storage solutions STO, such as tape drive storage TDS or third-party servers TPS. In a data utilization phase P5, all data records R are registered in a data management system DMS to allow further improving the calculation of the value classification C. As data records R need to be available for multiple users, not only within a company, but also for partners, suppliers, etc., a multi-user access is provided.

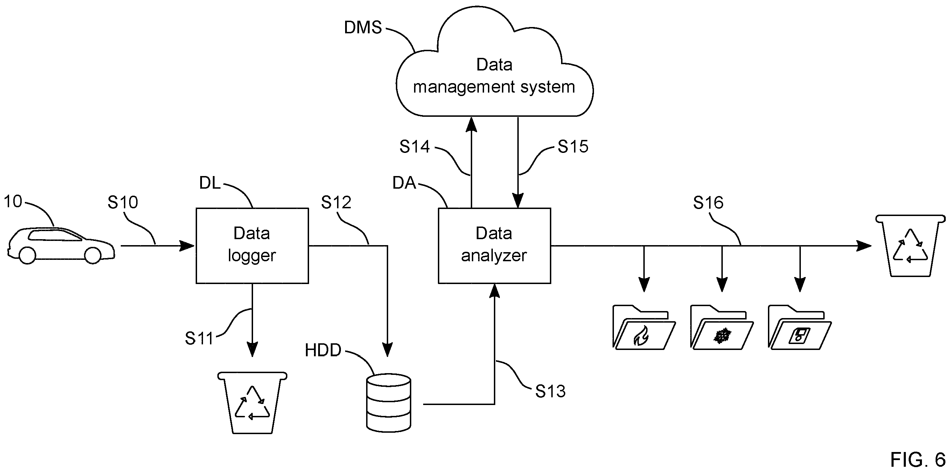

Fig. 6 schematically illustrates a first solution for data valuation. According to this solution, data valuation is performed using a post-analysis approach. Sensor data are captured S10 in the motor vehicle 10 and provided to a data logger DL. The data logger DL drops S11 corrupted data records and stores S12 the remaining data records to a hard disk drive HDD. Analyzing the data records in the motor vehicle 10 is demanding, as the data logger DL has a limited performance and the analysis leads to additional CPU load and additional load on the hard disk drive HDD. Therefore, the data records stored on the hard disk drive HDD are loaded S13 into a data analyzer DA for valuation. The data analyzer DA requests S14 and receives S15 content-related descriptors from a data management system DMS. The data analyzer DA then distributes S16 the data records according to their value classification. For example, the content-related descriptors may be obtained in the data management system DMS from a list of most used annotations from search-campaigns of users, by generating a heat map of labels associated with data records that have been downloaded by users in a recent period of time, or by a statistical analysis of data records that have been downloaded by users.

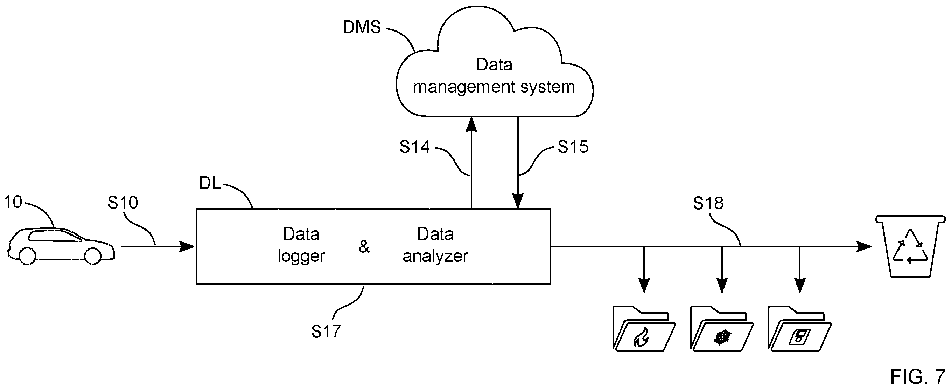

Fig. 7 schematically illustrates a second solution for data valuation. According to this solution, data valuation is performed in the data logger DL, i.e. the data analyzer is included in the data logger DL. As before, sensor data are captured S10 in the motor vehicle 10 and provided to the data logger DL. The data logger DL analyzes S17 the data records on the fly. In order to fulfill the analyzing task, it is advantageous if the data logger DL is expandable. The data logger DL requests S14 and receives S15 content-related descriptors from the data management system DMS and stores S18 the data records according to their value classification.

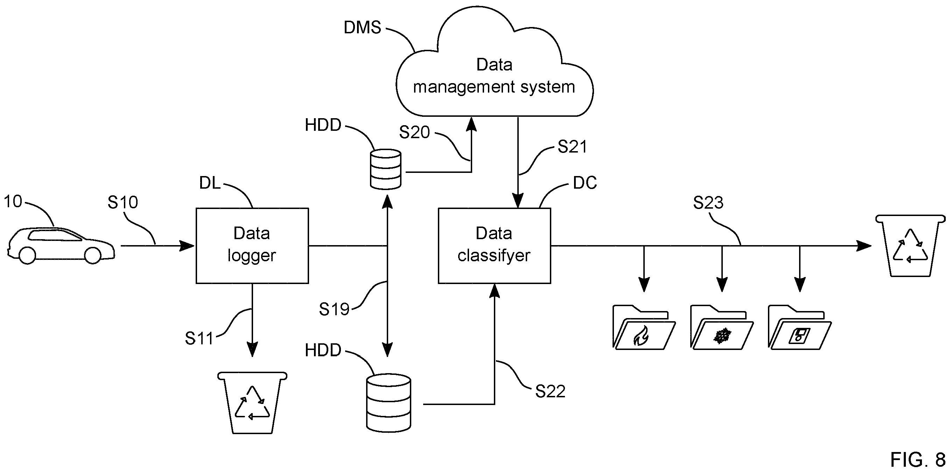

Fig. 8 schematically illustrates a third solution for data valuation. According to this solution, a cloud analysis approach is used for data valuation. Sensor data are captured S10 in the motor vehicle 10 and provided to the data logger DL. The data logger DL drops S11 corrupted data records and stores S19 high-bandwidth data records to a buffer, e.g., to hard disk drive HDD, whereas it uploads S20 low-bandwidths data records to the data management system DMS. Data analysis is performed in the data management system DMS on the low-bandwidth data records. A data classifier DC receives S21 data value information from the data management system DMS, cuts S22 data records from the buffer and pastes S23 those data records according to their value classification.

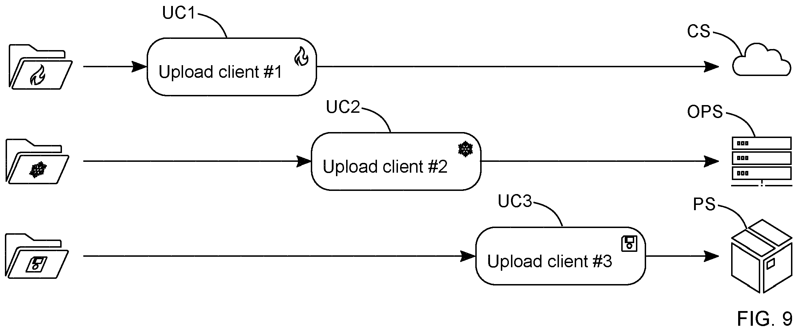

Fig. 9 schematically illustrates a solution for data transportation. Different upload clients UC1, UC2, UC3 are used for transportation of hot data records, cold data records, and archive data records. A first upload client UC1 is used for transportation of hot data records. For example, the first upload client UC1 may upload hot data records to a cloud storage CS during a test drive using a 5G connection. A second upload client UC2 is used for transportation of cold data records. For example, the second upload client UC2 may upload cold data records to an on-premises storage OPS during night break using a WiFi connection. A third upload client UC3 is used for transportation of archive data records. For example, the third upload client UC3 may make use of a postal service PS after a test drive to upload archive data records.

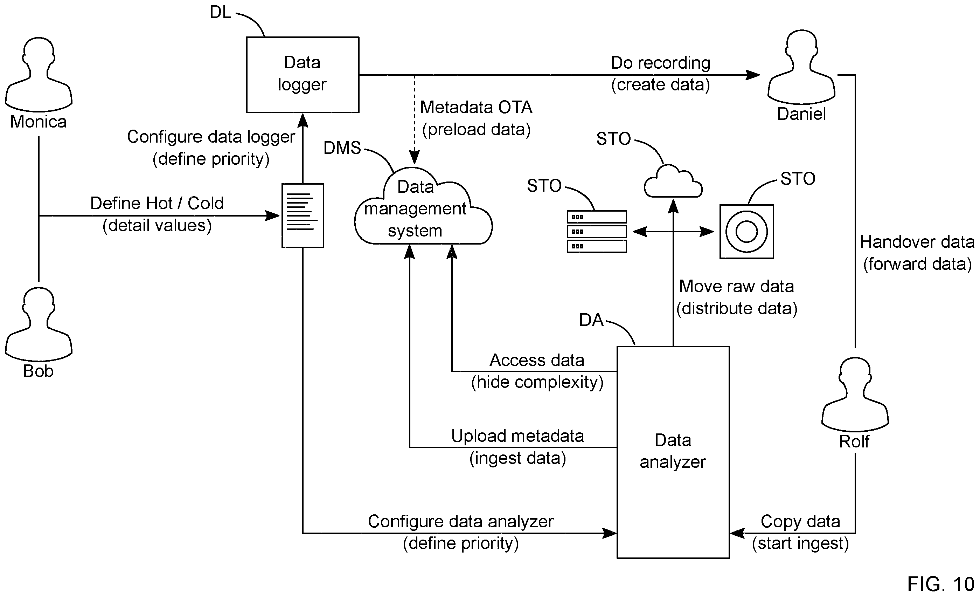

Fig. 10 depicts an exemplary use case for a solution according to the present principles. Monica, an engineer, does have very urgent needs for specific data records. She communicates to Bob, a data manager, that she needs three-lane highways with heavy traffic and heavy braking. Together they consider a strategy and decide that all data records with three-lane highways and heavy braking should be classified as hot data records. Bob knows how to identify this data using a predictor solution to flag three-lane highways, a camera of an advanced driver assistance system to flag heavy traffic, and CAN bus statistics to flag braking. Therefore, Bob configures a data analyzer DA as well as a data logger DL in the motor vehicle accordingly. Data is recorded by Daniel, the driver, optionally including manual annotation. The recorded data is handed over to Rolf, an assistant, whereas the metadata is sent over the air to the data management system DMS, if requested. The new data is then analyzed by the data analyzer DA, which uploads the metadata to the data management system DMS and uploads the raw data to the appropriate storage location STO, based on the configuration of hot and cold data records done by Bob. As soon as the data is ingested, it is automatically forwarded to the corresponding storage location STO, and Monica can access the data in the data management system DMS without burdening her with details of the data movement. In this way, Monica can use the ingested data to generate control logic (e.g., hardware and/or software) for controlling motion of a motor vehicle as it travels along a roadway in a highly automated or fully autonomous driving mode.

It is to be understood that, while some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

The disclosure is not restricted to the exemplary embodiments described above. There is scope for many different adaptations and developments that are also considered to belong to the disclosure. The present invention is only limited by the scope of protection of the appended claims.

### REFERENCE NUMERALS

- 10: Motor vehicle
- 100: Engine/transmission module
- 101: Global positioning system and navigation module
- 102: Sensors
- 103: Radio/entertainment module
- 104: Communications module
- 105: Data bus
- 106: Main processor
- 107: Storage
- 108: Digital signal processor
- 109: Display
- 110: Input/output module

- 20: Apparatus
- 21: Input
- 22: Descriptor retrieving unit
- 23: Data retrieving unit
- 24: Data classification unit
- 25: Data ingesting unit
- 26: Control unit
- 27: Local storage unit
- 28: Output
- 29: User interface

- 30: Apparatus
- 31: Memory device
- 32: Processing device
- 33: Input
- 34: Output

- C: Value classification
- CS: Cloud storage
- D: Descriptor
- DA: Data analyzer
- DL: Data logger
- DMS: Data management system
- HDD: Hard disk drive
- OPS: On-premises storage
- PS: Postal service
- R: Data record
- STO: Storage solution
- TDS: Tape drive storage
- TPS: Third-part server
- UC1, UC2, UC2: Upload client

- P1: Generation phase
- P2: Valuation phase
- P3: Ingestion phase
- P4: Storage phase
- P5: Utilization phase

- S1: Retrieve content-related descriptors
- S2: Retrieve data record to be ingested
- S3: Assign value classification to data record
- S4: Ingest data record in accordance with assigned value classification

- S10: Capture data
- S11: Drop corrupted data
- S12: Store data records
- S13: Load data records into data analyzer
- S14: Request content-related descriptors
- S15: Receive content-related descriptors
- S16: Distribute data records according to value classification
- S17: Analyze data records on the fly
- S18: Store data records according to value classification
- S19: Store high-bandwidth data records
- S20: Upload low-bandwidth data records
- S21: Receive data value information
- S22: Cut data records from buffer
- S23: Paste data records

## Claims

1. A method for ingesting data records, the method comprising:
retrieving (S1) content-related descriptors, each descriptor being associated with a value classification;
retrieving (S2) a data record to be ingested;
assigning (S3) a value classification to the data record based on the descriptors, wherein the descriptors and the associated value classifications are obtained by analyzing usage of previously ingested data records; and
ingesting (S4) the data record in accordance with the assigned value classification, wherein ingesting the data record comprises selecting one of a plurality of transmission channels for the data record based on the value classification,
wherein the transmission channels differ in bandwidth and transportation time.

2. The method of claim 1, wherein ingesting the data record in accordance with the assigned value classification includes selecting one of a plurality of transmission channels for the data record based on the value classification.

3. The method of claim 1, wherein ingesting the data record in accordance with the assigned value classification includes selecting one of a plurality of storage solutions for the data record based on the value classification.

4. A non-transitory computer readable storage medium storing instructions for ingesting data records, which, when executed by a processor of the computer, cause the computer to:
retrieve (S1) content-related descriptors, each descriptor being associated with a value classification;
retrieve (S2) a data record to be ingested;
assign (S3) a value classification to the data record based on the descriptors, wherein the descriptors and the associated value classifications are obtained by analyzing usage of previously ingested data records; and
ingest (S4) the data record in accordance with the assigned value classification, wherein ingesting the data record comprises selecting one of a plurality of transmission channels for the data record based on the value classification, wherein the transmission channels differ in bandwidth and transportation time.

5. The non-transitory computer readable storage medium of claim 4, wherein ingesting the data record in accordance with the assigned value classification includes selecting one of a plurality of transmission channels for the data record based on the value classification.

6. The non-transitory computer readable storage medium of claim 4, wherein ingesting the data record in accordance with the assigned value classification includes selecting one of a plurality of storage solutions for the data record based on the value classification.

7. An apparatus for ingesting data records, the apparatus comprising:
a descriptor retrieving unit (22) configured to retrieve content-related descriptors (D), each descriptor (D) being associated with a value classification;
a data retrieving unit (23) configured to retrieve a data record (R) to be ingested;
a data classification unit (24) configured to assign a value classification (C) to the data record (R) based on the descriptors (D), wherein the descriptors and the associated value classifications are obtained by analyzing usage of previously ingested data records; and
a data ingesting unit (25) configured to ingest the data record (R) in accordance with the assigned value classification (C), wherein ingesting the data record comprises selecting one of a plurality of transmission channels for the data record based on the value classification, wherein the transmission channels differ in bandwidth and transportation time.

8. The apparatus of claim 7, wherein for ingesting the data record in accordance with the assigned value classification, the data ingesting unit is configured to select one of a plurality of storage solutions for the data record based on the value classification.

9. The method, the non-transitory computer readable storage medium or the apparatus of one of the preceding claims, wherein the value classifications include two or more of hot, cold, and archive.

10. The method, the non-transitory computer readable storage medium or the apparatus of one of the preceding claims, wherein the storage solutions differ in availability and cost.

## Patentansprüche

1. Verfahren zum Aufnehmen von Datensätzen, wobei das Verfahren Folgendes aufweist:
Abrufen (S1) von inhaltsbezogenen Deskriptoren, wobei jeder Deskriptor mit einer Wertklassifizierung verknüpft ist;
Abrufen (S2) eines aufzunehmenden Datensatzes;
Zuweisen (S3) einer Wertklassifizierung zum Datensatz auf Basis der Deskriptoren, wobei die Deskriptoren und die zugewiesenen Wertklassifizierungen durch Analysieren einer Verwendung von zuvor aufgenommenen Datensätzen erhalten werden; und
Aufnehmen (S4) des Datensatzes gemäß der zugewiesenen Wertklassifizierung, wobei das Aufnehmen des Datensatzes das Auswählen von einem einer Vielzahl von Übertragungskanälen für den Datensatz auf Basis der Wertklassifizierung aufweist, wobei sich die Übertragungskanäle hinsichtlich Bandbreite und Transportzeit unterscheiden.

2. Verfahren nach Anspruch 1, wobei das Aufnehmen des Datensatzes gemäß der zugewiesenen Wertklassifizierung das Auswählen von einem einer Vielzahl von Übertragungskanälen für den Datensatz auf Basis der Wertklassifizierung beinhaltet.

3. Verfahren nach Anspruch 1, wobei das Aufnehmen des Datensatzes gemäß der zugewiesenen Wertklassifizierung das Auswählen von einer von einer Vielzahl von Speicherlösungen für den Datensatz auf Basis der Wertklassifizierung beinhaltet.

4. Nichttransitorisches computerlesbares Speichermedium, auf dem Anweisungen zum Aufnehmen von Datensätzen gespeichert sind, die, wenn sie von einem Prozessor des Computers ausgeführt werden, den Computer zu Folgendem veranlassen:
Abrufen (S1) von inhaltsbezogenen Deskriptoren, wobei jeder Deskriptor mit einer Wertklassifizierung verknüpft ist;
Abrufen (S2) eines aufzunehmenden Datensatzes;
Zuweisen (S3) einer Wertklassifizierung zum Datensatz auf Basis der Deskriptoren, wobei die Deskriptoren und die zugewiesenen Wertklassifizierungen durch Analysieren einer Verwendung von zuvor aufgenommenen Datensätzen erhalten werden; und
Aufnehmen (S4) des Datensatzes gemäß der zugewiesenen Wertklassifizierung, wobei das Aufnehmen des Datensatzes das Auswählen von einem einer Vielzahl von Übertragungskanälen für den Datensatz auf Basis der Wertklassifizierung aufweist, wobei sich die Übertragungskanäle hinsichtlich Bandbreite und Transportzeit unterscheiden.

5. Nichttransitorisches computerlesbares Speichermedium nach Anspruch 4, wobei das Aufnehmen des Datensatzes gemäß der zugewiesenen Wertklassifizierung das Auswählen von einem einer Vielzahl von Übertragungskanälen für den Datensatz auf Basis der Wertklassifizierung beinhaltet.

6. Nichttransitorisches computerlesbares Speichermedium nach Anspruch 4, wobei das Aufnehmen des Datensatzes gemäß der zugewiesenen Wertklassifizierung das Auswählen von einer von einer Vielzahl von Speicherlösungen für den Datensatz auf Basis der Wertklassifizierung beinhaltet.

7. Vorrichtung zum Aufnehmen von Datensätzen, wobei die Vorrichtung Folgendes aufweist:
eine Deskriptorabrufeinheit (22), die dazu ausgebildet ist, inhaltsbezogene Deskriptoren (D) abzurufen, wobei jeder Deskriptor (D) mit einer Wertklassifizierung verknüpft ist;
eine Datenabrufeinheit (23), die dazu ausgebildet ist, einen aufzunehmenden Datensatz (R) abzurufen;
eine Datenklassifizierungseinheit (24), die dazu ausgebildet ist, dem Datensatz (R) auf Basis der Deskriptoren (D) eine Wertklassifizierung (C) zuzuweisen, wobei die Deskriptoren und die zugewiesenen Wertklassifizierungen durch Analysieren einer Verwendung von zuvor aufgenommenen Datensätzen erhalten werden; und
eine Datenaufnahmeeinheit (25), die dazu ausgebildet ist, den Datensatz (R) gemäß der zugewiesenen Wertklassifizierung (C) aufzunehmen, wobei das Aufnehmen des Datensatzes das Auswählen von einem einer Vielzahl von Übertragungskanälen für den Datensatz auf Basis der Wertklassifizierung aufweist, wobei sich die Übertragungskanäle hinsichtlich Bandbreite und Transportzeit unterscheiden.

8. Vorrichtung nach Anspruch 7, wobei die Datenaufnahmeeinheit zum Aufnehmen des Datensatzes gemäß der zugewiesenen Wertklassifizierung dazu ausgebildet ist, eine von einer Vielzahl von Speicherlösungen für den Datensatz auf Basis der Wertklassifizierung auszuwählen.

9. Verfahren, nichttransitorisches computerlesbares Speichermedium oder Vorrichtung nach einem der vorhergehenden Ansprüche, wobei die Wertklassifizierungen zwei oder mehr von heiß, kalt und Archiv beinhalten.

10. Verfahren, nichttransitorisches computerlesbares Speichermedium oder Vorrichtung nach einem der vorhergehenden Ansprüche, wobei sich die Speicherlösungen hinsichtlich Verfügbarkeit und Kosten unterscheiden.

## Revendications

1. Procédé d'ingestion d'enregistrements de données, le procédé comprenant :
la récupération (S1) de descripteurs liés au contenu, chaque descripteur étant associé à une classification de valeur ;
la récupération (S2) un enregistrement de données à ingérer ;
l'attribution (S3) d'une classification de valeur à l'enregistrement de données sur la base des descripteurs, dans lequel les descripteurs et les classifications de valeur associées sont obtenus en analysant l'utilisation d'enregistrements de données précédemment ingérés ; et
l'ingestion (S4) de l'enregistrement de données conformément à la classification de valeur attribuée, dans lequel l'ingestion de l'enregistrement de données comprend la sélection de l'un d'une pluralité de canaux de transmission pour l'enregistrement de données sur la base de la classification de valeur, dans lequel les canaux de transmission diffèrent en largeur de bande et en temps de transport.

2. Procédé selon la revendication 1, dans lequel l'ingestion de l'enregistrement de données conformément à la classification de valeur attribuée inclut la sélection de l'un d'une pluralité de canaux de transmission pour l'enregistrement de données sur la base de la classification de valeur.

3. Procédé selon la revendication 1, dans lequel l'ingestion de l'enregistrement de données conformément à la classification de valeur attribuée inclut la sélection de l'une d'une pluralité de solutions de stockage pour l'enregistrement de données sur la base de la classification de valeur.

4. Support de stockage non transitoire lisible par ordinateur sur lequel sont stockées des instructions pour l'ingestion d'enregistrements de données, qui, lorsqu'elles sont exécutées par un processeur de l'ordinateur, amènent l'ordinateur à :
récupérer (S1) des descripteurs liés au contenu, chaque descripteur étant associé à une classification de valeur ;
récupérer (S2) un enregistrement de données à ingérer ;
attribuer (S3) une classification de valeur à l'enregistrement de données sur la base des descripteurs, dans lequel les descripteurs et les classifications de valeur associées sont obtenus en analysant l'utilisation d'enregistrements de données précédemment ingérés ; et
ingérer (S4) l'enregistrement de données conformément à la classification de valeur attribuée, dans lequel l'ingestion de l'enregistrement de données comprend la sélection de l'un d'une pluralité de canaux de transmission pour l'enregistrement de données sur la base de la classification de valeur, dans lequel les canaux de transmission diffèrent en largeur de bande et en temps de transport.

5. Support de stockage non transitoire lisible par ordinateur selon la revendication 4, dans lequel l'ingestion de l'enregistrement de données conformément à la classification de valeur attribuée inclut la sélection de l'un d'une pluralité de canaux de transmission pour l'enregistrement de données sur la base de la classification de valeur.

6. Support de stockage non transitoire lisible par ordinateur selon la revendication 4, dans lequel l'ingestion de l'enregistrement de données conformément à la classification de valeur attribuée inclut la sélection de l'une d'une pluralité de solutions de stockage pour l'enregistrement de données sur la base de la classification de valeur.

7. Appareil pour l'ingestion d'enregistrements de données, l'appareil comprenant :
une unité de récupération de descripteurs (22) configurée pour récupérer des descripteurs (D) liés au contenu, chaque descripteur (D) étant associé à une classification de valeur ;
une unité de récupération de données (23) configurée pour récupérer un enregistrement de données (R) à ingérer ;
une unité de classification de données (24) configurée pour attribuer une classification de valeur (C) à l'enregistrement de données (R) sur la base des descripteurs (D), dans lequel les descripteurs et les classifications de valeur associées sont obtenus en analysant l'utilisation d'enregistrements de données précédemment ingérés ; et
une unité d'ingestion de données (25) configurée pour ingérer l'enregistrement de données (R) conformément à la classification de valeur (C) attribuée, dans lequel l'ingestion de l'enregistrement de données comprend la sélection de l'un d'une pluralité de canaux de transmission pour l'enregistrement de données sur la base de la classification de valeur, dans lequel les canaux de transmission diffèrent en largeur de bande et en temps de transport.

8. Appareil selon la revendication 7, dans lequel pour ingérer l'enregistrement de données conformément à la classification de valeur attribuée, l'unité d'ingestion de données est configurée pour sélectionner l'une d'une pluralité de solutions de stockage pour l'enregistrement de données sur la base de la classification de valeur.

9. Procédé, support de stockage non transitoire lisible par ordinateur ou appareil selon l'une des revendications précédentes, dans lequel les classifications de valeur incluent deux ou plus de chaud, froid, et archive.

10. Procédé, support de stockage non transitoire lisible par ordinateur ou appareil selon l'une des revendications précédentes, dans lequel les solutions de stockage diffèrent en disponibilité et en coût.
